# EUROPEAN PATENT SPECIFICATION

(11) **EP 3 895 145 B1**
(45) Date of publication and mention of the grant of the patent: **07.08.2024**
(21) Application number: 19818088.7
(22) Date of filing: 16.12.2019
(51) Int. Cl.: H04W 4/024, H04W 4/02, H04W 4/08, H04W 4/40, G08G 1/01, G08G 1/015, G08G 1/017, G08G 1/04, G08G 1/08, G08G 1/00, G08G 1/0967

(54) **METHOD AND SYSTEM FOR VEHICLE ROUTING ON A ROAD SEGMENT**
VERFAHREN UND SYSTEM ZUR FAHRZEUGLEITUNG AUF EINEM STRASSENSEGMENT
PROCÉDÉ ET SYSTÈME D'ITINÉRAIRE DE VÉHICULE SUR UN TRONÇON DE ROUTE

(30) Priority: 14.12.2018 LU 101055
(43) Date of publication of application: 20.10.2021
(73) Proprietor: Luxembourg Institute of Science and Technology (LIST), 4362 Esch-sur-Alzette (LU)
(72) Inventor: FELTUS, Christophe, 6750 Mussy-la-Ville (BE)
(74) Representative: Lecomte & Partners
(86) International application number: PCT/EP2019/085267
(87) International publication number: WO 2020/120789

(56) References cited:
- JP-A- 2009 157 794
- JP-A- 2009 157 794
- US-A1- 2008 012 726
- US-A1- 2014 316 865
- US-A1- 2014 316 865
- US-A1- 2018 329 428
- US-A1- 2018 329 428
- US-B1- 6 356 820
- US-B1- 6 356 820

## Description

### Technical field

The invention lies in the field of road traffic optimization and relates in particular to a method and system for vehicle routing on a road segment.

### Background of the invention

The road infrastructure, in particular but not only in urban areas, tends to become overloaded and congested regularly due to the increasing number of vehicles engaged thereon. Traffic signaling is nowadays mainly static and consists of road signs, speed limit constraints and signaling drawing attention to other prohibitions, rules and regulations that are applicable to portions of the road infrastructure. However, the density of traffic on a portion of road infrastructure depends not only on such static parameters, but it also depends on the dynamics of the vehicles and their users at any given time. Hence, the existing signaling and traffic managements systems only leverage part of the available information, and therefore remain sub-optimal.

Patent document US 2014/316865 A1 discloses a method providing a dynamic organisation of vehicles in a platoon, which is a line of vehicles, so as to optimise the energy consumption of the vehicles participating in the line of vehicles.

### Technical problem to be solved

It is an objective of the invention to present a method, which overcomes at least some of the disadvantages of the prior art. In particular, an automated vehicle routing method is proposed, which allows for flexible determination of vehicle routing data based on any information that is available, describing either feature of the vehicles, of the road infrastructure or context-related features.

### Summary of the invention

In accordance with a first aspect of the invention, a method for vehicle routing on a road segment is provided. The method comprises the following steps:
a) providing, in a memory element, first data describing the road segment and second data describing an initial allocation of vehicles engaged on the road segment, comprising a set of features comprising vehicle dimensions for each vehicle, and an indication of the surface occupied by each vehicle on the road segment;
b) using data processing means, determining groups of vehicles based on said second data, wherein vehicles in the same group share at least one common feature;
c) using data processing means, computing allocation data by:
   - associating at least one shape with each group of vehicles, wherein the shapes are chosen so that the aggregate surface of the shapes covers the aggregate surface occupied by all the vehicles of said group;
   - allocating the shapes, including the vehicles associated with each shape, to portions of the road segment;
   wherein the shapes and the allocation are such that they satisfy a set of constraints, comprising the dimensions of said road segment;
d) communicating at least part of the resulting allocation data to said groups of vehicles.

Preferably the shapes and the allocation may be such that they satisfy a set of constraints, comprising the dimensions of said road segment and traffic rules applicable to said road segment at the time of allocation.

A vehicle may comprise any automotive vehicle, any bicycle, but the interpretation may also extend to pushchairs being driven on a sideway that may be considered to be part of the road segment, or other objects evolving in the road traffic. These may even comprise pedestrians or animal herds. A group of vehicles may also be considered as a vehicle.

The data processing means may preferably comprise a data processor, such as a central processing unit, CPU, of a computing device. The CPU is programmed using computer instructions, preferably provided by a software stored in a memory element of the computing device, to perform the steps in accordance with the method as given by aspects of the invention.

The computing device may preferably have having a processor and persistent storage, and it may preferably be running an operating system, and have access to an information storage system, such as a file system, or a structured database. The computing device has at least one networking interface for transmitting/receiving data to/from a vehicle or another computing device trough either a wired or wireless data communication channel. Alternatively, the computing device may comprise a plurality of computing devices being connected in a data communication network, the computing and storage resources of which collaboratively provide at least the aforementioned services. The aforementioned alternatives are equivalent in view of the present invention, unless stated otherwise. Any data, such as constraints, features, or others, may be stored in a memory element. The memory element may be a structured memory element such as a database. It may be physically collocated or remote to the computing device, for as long as the data processor has read/write access to it, either through a local data bus or through a data communication network.

Preferably, the allocation of the shapes to portions of the road segment may depend on the initial allocation of the vehicles on said road segment.

The second data, which describes an initial allocation of vehicles engaged on said road segment comprises, may preferably comprise a shape-based allocation obtained earlier using the method of according to an aspect of the invention. Further, the shapes associated with each group of vehicles at step c) may preferably depend on the shapes associated to said group of vehicles in said earlier allocation.

Preferably, at least part of said second data may be obtained using sensing means, comprising image sensors provided along said road segment and/or onboard of said vehicles. At least part of said second data may preferably be obtained through a communication channel linking a computing device of any of said vehicles to said processing device. The communication channel may for example comprise a social networking interface.

The method may further preferably comprise the step of:
- allocating to each vehicle a position within its respective shape. The allocation may further be based on constraints describing the context in which the vehicles evolve, on the first and/or secondary data, and/or on the aerodynamics of the shaped group that is generated (e.g., small vehicles of reduced height in front of large and high vehicles).

The position may be an absolute position in terrestrial coordinates, or a relative position within said shape.

Preferably, the allocation data may comprise, for each group or for each vehicle, timing information generated by said data processing means, the timing information including a time or time offset by which the allocation should be implemented.

The allocation data may preferably comprise data describing driving instructions for said vehicles, generated by said data processing means, said instructions allowing each of said vehicles to achieve the resulting allocation.

Preferably, the set of constraints may further comprise constraints relating to the features of said vehicles, such as dimensions, speed, destination, passenger occupancy, or any combination thereof.

The traffic rules may further preferably comprise speed limits, lane dimensions, an indication of a portion of the road segment being reserved for at least one specific type of vehicles, or any combination thereof.

Preferably, the traffic rules may evolve in time and depend on road conditions, weather or a combination thereof.

The set of constraints may further preferably comprise an overall exhaust gas emission limit for the vehicles on said road segment.

Preferably, the resulting allocation data may be applied by said data processing means on a traffic model generated from said first and second data, for the purpose of simulating traffic management.

In accordance with a second aspect of the invention, a method for simulating traffic generated by vehicles on a road segment is provided. The method comprises the following steps:
aa) providing, in a memory element, first data describing the road segment and second data describing an initial allocation of vehicles engaged on the road segment, comprising a set of features for each vehicle, and an indication of the surface occupied by each vehicle on the road segment;
bb) using data processing means, determining groups of vehicles based on said second data, wherein vehicles in the same group share at least one common feature;
cc) using data processing means, computing allocation data by:
   - associating at least one shape with each group of vehicles, wherein the shapes are chosen so that the aggregate surface of the shapes covers the aggregate surface occupied by all the vehicles of said group;
   - allocating the shapes, including the vehicles associated with each shape, to portions of the road segment;
   wherein the shapes and the allocation are such that they satisfy a set of constraints, comprising the dimensions of said road segment;
dd) simulation the evolution of the position data of said vehicles using the data processing means, based on the resulting allocation data to said groups of vehicles.

Preferably, the shapes and the allocation may be such that they satisfy a set of constraints, comprising the dimensions of said road segment and traffic rules applicable to said road segment at the time of allocation.

According to a further aspect of the invention, a device for computing allocation data for the management of traffic on a road segment is provided. The device comprises data processing means and at least one memory element for storing first data describing the road segment and second data describing an initial allocation of vehicles engaged on said road segment, comprising a set of features for each vehicle, and an indication of the surface occupied by each vehicle on said road segment. The data processing means are configured for:
- determining groups of vehicles based on said second data, wherein vehicles in the same group share at least one common feature;
- computing allocation data by:
   -- associating at least one shape with each group of vehicles, wherein the shapes are chosen so that the aggregate surface of the shapes covers the aggregate surface occupied by all the vehicles of said group;
   -- allocating the shapes, including the vehicles associated with each shape, to portions of the road segment;
   wherein the shapes and the allocation are such that they satisfy a set of constraints, comprising the dimensions of said road segment;
- storing the resulting allocation data in a memory element.

Preferably, the shapes and the allocation may be such that they satisfy a set of constraints, comprising the dimensions of said road segment and traffic rules applicable to said road segment at the time of allocation.

The data processing means may further preferably be configured to transmit, using a data transmitter, said allocation data to said vehicles.

According to another aspect of the invention, a computer program comprising computer readable code means is provided, which, when run on a computer, causes the computer to carry out the method according to aspects of the invention.

In accordance with yet another aspect of the invention, a computer program product is provided. The computer program product comprises a computer-readable medium on which the computer program according to aspects of the inventions is stored.

The proposed method allows traffic management on a road segment by taking into account not only the constraints that stem from the road segment or from legal regulations, but by also taking into account features or properties of the vehicles that are engaged on the road segment. Legal regulations, such as traffic laws, road rules and regulations are becoming complex. They include rules for improving safety, improving the traffic flow (highway traffic rules, emergency vehicle priority), and improving the environmental aspects (less pollution, green policies). This is also modelled in the constraints. Vehicles are grouped together depending on a common set of features such as vehicle size, emissions, destination, occupancy or others, which may be flexibly defined as a system parameter. An individual geometric allocation of such vehicle groups is then computed so as to comply with the constraints that describe for example the road infrastructure and/or the vehicles or their respective users. For example, a group of stackable vehicles with a given height may be associated to a road section depending on the available height at the section (e.g. a section situated under a bridge or in a tunnel). The resulting allocation is communicated to the groups of vehicles, either for example by using dynamic road signalling infrastructure or by transmitting the data using a data communication channel to the respective vehicles. Embodiments of the invention allow for example to modify the constraints or traffic rules linked to the road infrastructure dynamically such as: depending on the time of day, depending on meteorological conditions and/or depending on the features of vehicles that are engaged on the road infrastructure. As such, a road lane may be used in one direction at given time of day, while it may be used in the opposite direction at a later time, or even as a parking space. Or, for the same width of road the system may define 3 rows of slow cars or 2 rows of fast cars. By relying on the method as proposed by embodiments of the invention, the importance for a static road signaling infrastructure is lessened, and static signaling may even be rendered obsolete (e.g. lane and pedestrian crossing). In the same spirit, signaling devices or sensors in automotive vehicles such as turn indicators or fog lights, may be rendered obsolete as the traffic management as provided by aspects of the invention allows to manage the traffic based on potentially any traffic-related information that is available. The allocation of vehicles as provided by embodiments of the invention indeed inherently accounts for all constraints that should be respected at the time of computation, including vehicle features, road infrastructure constraints, and traffic rules, or other constraints relating to the context in which the vehicles evolve (i.e. weather conditions or others). By grouping vehicles having common features together, macroscopic traffic features become usable by the proposed algorithm, which are difficult to take into account using known systems. As the allocation provides a distribution of vehicles on a road segment that takes into account common features of vehicles and/or their users, such as for example common destinations, the fluidity of the traffic is generally improved, and congestions are avoided, as less lane changes will be required by the vehicles in order to get to their destination, which generally reduces the risk of traffic accidents. The framework proposed by the invention allows to route vehicles engaged on a road segment in such a way that the resulting traffic complies with a given set of constraints and rules. The constraints and rules may change in time or per policy, resulting in a different traffic routing pattern, while relying on the same underlying computation method. For example, the method may be used to route vehicles so as to minimize the time spent on the road, to minimize the CO₂ emissions, to minimize the size of the infrastructure used, or to minimize the cost of moving. Finally, when used as a simulation tool, wherein the features of the road infrastructure also become a system parameter, the proposed method allows to forecast the traffic density on a planned portion of road infrastructure, and thereby helps to dimension the latter in an adequate way.

Another advantage is that nowadays existing lanes, which are signalled using lines drawn on the road potentially become obsolete. The information about where the vehicle has to be positioned (e.g. GPS coordinates) is transmitted to the vehicle. When it snows or even when it rains, it is often difficult for a driver to discern existing lanes that are drawn on the road, or the pedestrian crossing for example. The system in accordance with aspects of the invention offers the advantage to guide vehicles without suffering of that problem, and it thereby increases overall road safety. As the method in accordance with the invention potentially renders traditional traffic signalling obsolete, yet another advantage emerges: vehicles are provided with universally understandable routing information, that does not require their drivers to understand the language which the traditional signs are written in. As described above, a system operating according to the proposed method can adapt the traffic according to a very large number of situations. An advantage of the system is that, most of the time, computed groups change less often than computed allocations, and also computed shapes of groups change less often than allocations but more often than groups. This potentially leads to good computational performance.

### Brief description of the drawings

Several embodiments of the present invention are illustrated by way of figures, which do not limit the scope of the invention, wherein:

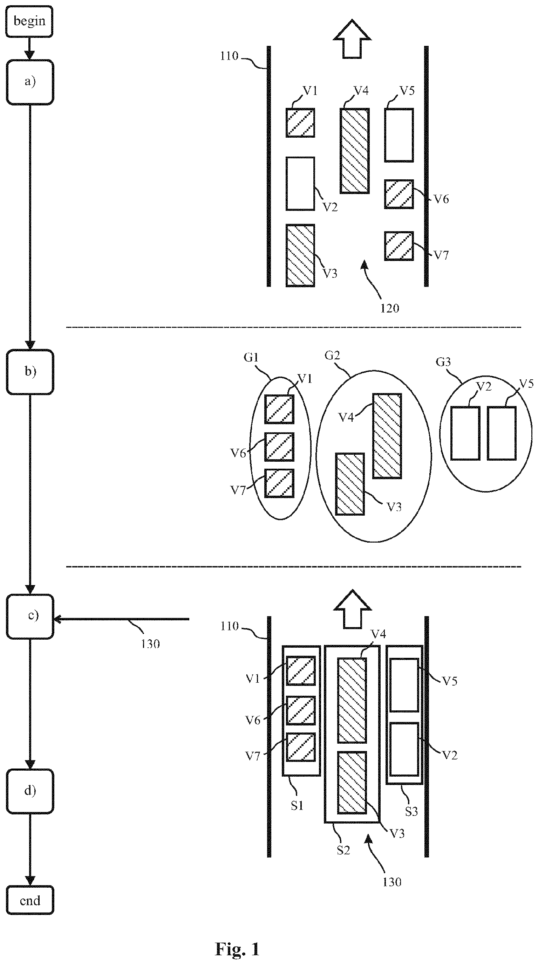

- figure 1 shows a workflow of the main steps of the method in accordance with a preferred embodiment of the invention on the left, and provides an illustration of some of the steps on the right.

### Detailed description of the invention

This section describes the invention in further detail based on preferred embodiments and on the figures. Similar reference numbers will be used to describe similar or the same concepts throughout different embodiments of the invention.

It should be noted that features described for a specific embodiment described herein may be combined with the features of other embodiments unless the contrary is explicitly mentioned. Features commonly known in the art will not be explicitly mentioned for the sake of focusing on the features that are specific to the invention.

Figure 1 illustrates the main steps of the method in accordance with a preferred embodiment of the invention. At step a), first data describing a road segment 110 and second data describing an initial allocation 120 of vehicles V1 to V7 on the road segment is provided in a memory element of a computing device. Each vehicle can be uniquely identified at the computing device, for example using a unique character string. The road segment may be a relatively short stretch of a street, or it may comprise a subset of a larger road infrastructure, including bends, crossings or bifurcations, or stretches of variable width. The example illustrated by figure 1 is simple for the sake of explaining the main features of the invention. In a realistic scenario, the method may handle tens or hundreds of vehicles driving on a road infrastructure segment. Decisions on the routing of the vehicles are preferably computed continuously and implemented swiftly in order to improve the traffic flow on the road segment. In particular, constraints on the road segment, such as vehicles that have suffered an accident or that are blocked in a traffic jam, road works, may occur at any time, so that these constraints need to be taken into account quickly. Such complex and time sensitive systems cannot be handled by a human and require and automated process.

The initial allocation 120 may for example be the result of a previous iteration of the herein described method steps, and therefore the data relating to the initial allocation, including initial groups and shapes of groups, will be readily available in the computing device's memory element. Alternatively, the data relating to the initial allocation may be gathered via a communication network in which roadside sensors, such as cameras, and coupled image processing devices are used to detect the number, size and type of vehicles engaged on the road segment, as well as their respective positions. In another alternative, at least some of the vehicles may be connected to the communication network and their internal data communication systems may be configured to provide their location data and vehicle related information to the computing device. The vehicles may obtain their positions on the road segment using a satellite positioning system, such as the Global Positioning System, GPS, or Galileo^{™}. In yet another embodiment, satellite imagery data may be used together with image processing devices, so as to determine positions and/or other features of vehicles on the road segment. A combination of these alternatives may also be used. Further, a previous computed allocation may be updated and refined with sensor data and/or data that is available from the vehicles engaged on the road segment.

The initial allocation data 120 comprises a set of features for each vehicle, and in particular an indication of the surface occupied by each vehicle on the road segment. The initial allocation data may also comprise all results of some past iterations of the proposed method (computed groups, computed shapes of groups and computed allocation) stored, for instance, in a database.

Using a data processor of the computing device, groups of vehicles G1, G2, G3 are determined based on the content of said second data 120 at step b). Vehicles that share at least one common feature are attributed to the same group. The selection features may for example comprise the size of the vehicle, it's CO₂ emission level, its destination, user occupancy or others, without being limited to these examples. In the simplified example of figure 1, group G1 comprises the small and fast vehicles V 1, V6 and V7, group G2 comprises the buses V3 and V4, while group G3 comprises the mid-size vehicles V2 and V5, which in accordance with this example share a common destination. All vehicles are engaged in the same direction in the depicted example, although the invention is by no means limited to such a case. Depending on the application in which the method in accordance with aspects of the invention finds its use, groups may be defined by any logical combinations of multiple vehicle features, resulting for example in a group of trucks, a group of buses running to an event, a group of vehicles going from Luxembourg to Brussels, a group of vehicles with a speed limit of 10 mph, a group of help and assistance for vehicles having technical problems, a group of subgroups going to the south of France starting at Paris. Still depending on the application (for instance requiring that groups changes less often than allocations), groups may optionally be defined by any logical combinations of all constraints describing the context in which the vehicles evolve (including traffic laws, rules, or regulations) in addition to the first and/or second data. Vehicle features may comprise among others features directly linked to the vehicle (e.g. size, position, direction, energy used, propulsion technology, capacity, age, type of tires, pollution, safety technology, ...), features linked to the vehicle's destination, features linked to the vehicle's driver (age of the driver, type and age of licence, driver's preferences, level of tiredness, purpose such as business or leisure, ...), state of the vehicles, state of the tires (e.g. summer or winter tires, old or new, at the accurate pressure, etc.), alerts in the vehicle (e.g. level of oil), age of the vehicle, orientation of the vehicle on the road, volume or percentage of remaining energy (e.g. tank full or empty), number of passenger in the vehicle, age (e.g. baby on board) and state of health of the passengers (e.g. pregnant woman), legal aspects, such as nationality of the vehicle, nationality of the driver and passengers, to business information such as goal and profession of the driver and passengers (protester, sportive, tourists, supporters, healthcare, rescue team,...), the duration of the stationing, the vehicle comfort and drivers sensibility, the level of luxury of the vehicle, the stability of the vehicle (e.g. usage of abs system, parking assistance...), driver and/or passengers business, hobbit, sport, club, association, family member, service required, used or willing to be used in/on the vehicle (e.g. modular vehicles) or any combinations thereof. The combinations can be defined by any means used in information management such as any kind of database methods (e.g. SQL), semantic queries (e.g. RDF or OWL), learning methods, clustering methods, deep learning, etc.

At step c), the data processor proceeds with computing allocation data 130 based the determined groups of vehicles, and based on a set of constraints, which notably comprises the dimensions of the road segments and the applicable traffic rules, without being limited thereto. The computation of the allocation data 130 includes the step of generating and at least one shape S1, S2, S3 for each group of vehicles G1, G2, G3 that has been previously determined. The shapes are chosen so that the aggregate surface of the shapes covers at least the aggregate surface occupied by all the vehicles of the corresponding group. In the case of modular stackable vehicles in a given group, their respective sizes may be considered in a three-dimensional stacked configuration, so that for example two stackable vehicles of unit spatial size occupy an aggregate surface of one spatial unit on the road surface when stacked on top of each other.

In accordance with a preferred embodiment, the method takes into account the velocities at which the vehicles or the aggregate traffic on the road segment evolves. The time it takes to compute the new allocation is estimated or measured by the data processing means and the average displacement of the vehicles during the time of computation is taken into account at the step of allocating the shaped groups of vehicles to portions of the road segment. The faster the computation is performed, the lesser the importance of this speed compensation measure becomes.

In accordance with a preferred embodiment, the method uses a set of fixed and well-defined parameterised geometric shapes, of different sizes to start the shaping of the groups. With each group that has been previously determined, the method associates one or more geometric shapes with zero, one or more refinements of the parameter constraints. The shapes selected and the refinement depend for example on the characteristics of vehicles, the number of vehicles in the group, or the geometry of the road segment or infrastructure, the context (type of traffic, weather conditions, ...). For example, shapes may be generated in accordance with simple rules such as: trucks should be aligned, two-wheeled vehicles should be put in a rectangular shape, an emergency vehicle or a vehicle driven by a driver having already been involved in one or more accidents should be constrained to be in a dedicated cluster, a vehicle driven by a driver with a special status (e.g. driving licence type) should be allowed to be in any cluster it wishes, and so on. A level of priority may be associated with any such shape generation rule, which may be weighted and logically combined in a group shaping algorithm. The resulting shapes may have any geometry: regular, irregular, free form, convex or not, connected or not, ....

Advantageously, if a group of vehicles comprises at least some vehicles which were already present during a previous iteration of the method, the shape associated to the corresponding group(s) depends on the shape previously associated with the group(s) in which the vehicle(s) evolved, in order to make sure that the evolution of shape and of the associated traffic is continuous and fluid. In such a case, the parameters of the previously generated shape may for example be modified within a predetermined margin of values only, e.g., a shape covering three lanes must first be reduced to a shape covering two lanes being longer, before it is possible to reduce the shape further to cover only a single lane. Clearly, any previous allocation or vehicle routing data that has been generated by the method remains advantageously available for future iterations thereof in a memory element to which the data processing means have access.

In accordance with another embodiment, the shapes may be generated at step c) of the method based on features or properties of the road infrastructure (e.g. the size of shape grouping heavy vehicles may not accommodate more than five vehicles to cross a bridge because of the bridge's stability, ....), based on features of the vehicles within the groups (e.g. a shape grouping trucks with dangerous good may not accommodate two lines because it represents a larger danger), and based on the context (e.g. shapes grouping vehicles arriving at their destination). The shapes may also be generated by considering ecological reasons. For example, it may be preferable, for ecology, to have one big shape grouping a large number of vehicles rather than one or two smaller shapes grouping a smaller number of vehicles. The shapes may also be generated by considering stability reasons, e.g., the shape of group of vehicles may depend on the speed of the vehicles or on the curves of the road segment. Further, the shapes may be generated by taking into accounts constraints linked to vehicles insurance policies, e.g., a company may impose security characteristics within a group (space between vehicles) and the group needs to be in the shape of a line. Still further, shapes may be generated by considering security reasons, e.g., a shape grouping vehicles driven by young drivers, a shape grouping vehicles driven by drivers learning to get the driving licence, ... may include less vehicles than shapes grouping vehicles that don't have these features.. Further, shapes may be generated by considering reasons of aerodynamics or of user convenience (spear-headed shapes, ...), e.g. a lane or a portion of a road segment may be the object of a reservation, a shape grouping buses of tourists may be required to be line-shaped, etc...

Once the shapes have been generated, the method then proceeds with allocating the resulting shapes to respective portions of the road segment. The shapes capture the geometric constraints of the vehicles, as well as their respective features, as they depend on the underlying groups that where determined based on the features of the vehicles.

Each geometric shape, associated to a group of vehicles, is assigned to a segment of the infrastructure based on specific rules (e.g. trucks to Brussels are gathered on a road segment that covers the whole width of the road), based on priority rules, based on the others shapes, based on the context (e.g. traffic rules, state of the road segment, for example, no shape may be associated to a flooded road, potholes, ...), based on constraints among shapes. This is preferably performed using algorithms that are as such well known in the art, and which will not be explained in detail in the context of this invention (e.g. a Bin packing algorithm - see: "Approximation algorithms for bin packing: A survey", which is publicly available on the Internet at http://www.labri.fr/perso/eyraud/pmwiki/uploads/Main/BinPackingSurvey.pdf, and which is hereby incorporated by reference in its entirety). Preferably, the allocation of the shapes to portions of the road infrastructure also takes into account allocations of other vehicles, no longer or not yet engaged on the road segment, but engaged on adjacent road segments. In case multiple allocations are possible, all such allocations may be computed and stored for later usage, while an additional selection criterion may be used to select the allocation that is to be communicated to the vehicles. The selection may for example depend on previously communicated allocations, or on traffic evolution forecasts for the road segment under consideration.

It should be understood that rules or policies that define how vehicles are grouped and how groups of vehicles are shaped depend on specific applications or embodiments of the invention. These parameters are generally user-defined parameters of the method, which are predetermined and prestored in a memory element to which the data processing means have access.

At step d) of the method, at least part of the resulting allocation data 130 is communicated to said groups of vehicles G1, G2, G3. In the simplified example of figure 1, the three groups are attributed rectangular shapes of different sizes, which are in turn allocated to three adjacent lanes. Group G1 comprising the fast and small cars V 1, V6, V7 is allocated to the left most lane where high speeds are allowed. The buses V3 and V4 are allocated to their dedicated middle lane, while vehicles V2 and V5 evolve unhindered towards their common destination on the rightmost lane of the road segment. The corresponding vehicles will continue to drive and evolve on the road segment in accordance with the received allocation data until new allocation data will be received. Preferably, the method steps are repeated periodically or continuously to adapt the allocation of vehicles to portions of the road segment as the traffic evolves. Another example of shape for the group G1 would have been a large rectangle (full width of the road) in front of the shapes of groups G2 and G3 so that the shapes of groups G2 and G3 can be enlarged providing more safety space between buses and cars.

Optionally, the allocation data 130 may be further enriched by providing a specific position for each vehicle within each group or shape. Further, the allocation data 130 may comprise specific driving instructions (i.e. V4 slow down, let V2 move to the right, ...) that should be implemented by the respective vehicles in order to achieve the desired allocation. The allocation data 130 may further comprise timing data, indicating a time limit as counted from the reception of the allocation data, by which the allocated positions on the road segment should be realized.

According to a preferred embodiment, the computations of step c) may be performed by a central computing device, which may be either a central physical device or a host of physical devices collaboratively implementing a cloud-based service. All communications be secured, for example using cryptographically secure encryption keys that are distributed to any parties of the system that are involved in data communications. The centralized system may have access to a database storing any constraints which are linked to the road segment under consideration at any given time. The database may comprise static information such as road segment dimensions, or dynamic information such as weather conditions, possible static or dynamic obstacles including vehicles that do not participate in the routing process in accordance with the described method, possible reservations of parts of the road segment or others. User-defined constraints are preferably entered into the database using a dedicated user-interface, such as a web platform that is accessible via a public secured data communication channel by any computing device. The central computing device also respects privacy requirements such as the one dictated by frameworks like the European General Data Protection Regulation. Communication of data from the central computing device to the vehicles may take on different forms. The communication of data from the central computing device may be indirect, by using a signaling infrastructure as an intermediary. For example, road side street panels having LED displays and to data receiving means may receive at least part of the computed allocation data and display instructions to the drivers along the road segment. Alternatively, the allocation data may be directly communicated from the central computing device to each one of the vehicles, so that users or drivers of the vehicles receive notifications describing the allocation data either visually or via audio instructions from the vehicle's communication system interface. In a further alternative, the allocation data, or at least part thereof, is transmitted to road side infrastructure which relays it, for example using a WiFi signal, to passing vehicles. In yet another alternative, the allocation data, or at least part of it, once it has been received by at least one vehicle being part of a vehicular network, is broadcast within the vehicular network to other vehicles. In another embodiment, the computations of step c) may be at least partly performed by distributed computing devices, which may comprise at least some computing devices embedded with the vehicles. The routing data communicated to the vehicles may further comprise several options, one of which may be selected by the vehicle or by its driver. If the vehicles comprise pedestrians or essentially human driven vehicles such as pushchairs, communication of the allocation data or routing instructions may be implemented by sending the data to a communication device (smartphone, smart glasses, ...) of the user/driver, for example via a 3G, 4G or 5G cellular data transmission service.

In a preferred embodiment, the vehicles are at least partly autonomous vehicles to which the allocation data 130 is transmitted, and which are capable of directly enacting the computed allocation on the road segment.

The first and second data, and the allocation data and routing instructions generated by the data processing unit are stored in a long term memory and may be used to forensic analysis of the driver's behaviour (e.g. after a crash to determine the responsibilities, for analysis of the drivers' behaviour when determining the insurance premium, for commercial purpose, etc.). These data may also be used in order to forecast system behaviour and to make decisions using deep learning technics.

Based on the description and figures that have been provided, a person with ordinary skills in the art will be able to construct a computer program for implementing the described method steps without undue burden. It is also understood that some of the steps may be implemented in parallel rather than sequentially. A sequential description of the method steps has been given for reasons of clarity, without however limiting the scope of the invention thereto.

It should be understood that the detailed description of specific preferred embodiments is given by way of illustration only, since various changes and modifications within the scope of the invention will be apparent to the person skilled in the art. The scope of protection is defined by the following set of claims.

## Claims

1. A method for vehicle routing on a road segment, the method comprising the following steps:
a) providing, in a memory element, first data describing the road segment (110) and second data describing an initial allocation (120) of vehicles (V1-V7) engaged on the road segment, comprising a set of features comprising vehicle dimensions for each vehicle, and an indication of the surface occupied by each vehicle on the road segment;
b) using data processing means, determining groups of vehicles (G1, G2, G3) based on said second data, wherein vehicles in the same group share at least one common feature;
**characterized in that** the method further comprises the following steps:
c) using data processing means, computing allocation data (130) by:
- associating at least one shape (S1, S2, S3) with each group of vehicles (G1, G2, G3), wherein the shapes are chosen so that the aggregate surface of the shapes covers the aggregate surface occupied by all the vehicles of said group;
- allocating the shapes, including the vehicles associated with each shape, to portions of the road segment (110); wherein the shapes and the allocation are such that they satisfy a set of constraints, comprising the dimensions of said road segment and traffic rules applicable to said road segment at the time of allocation;
d) communicating at least part of the resulting allocation data (130) to said groups of vehicles (G1, G2, G3).

2. The method according to claim 1, wherein said allocation of the shapes to portions of the road segment depends on the initial allocation of the vehicles on said road segment.

3. The method according to any of claims 1 or 2, wherein said second data, which describes an initial allocation of vehicles engaged on said road segment, comprises a shape-based allocation obtained earlier using the method of claim 1, and wherein the shapes associated with each group of vehicles at step c) depend on the shapes associated to said group of vehicles in said earlier allocation.

4. The method according to any of claims 1 to 3, wherein at least part of said second data is obtained using sensing means, comprising image sensors provided along said road segment and/or onboard of said vehicles.

5. The method according to any of claims 1 to 4, further comprising the step of:
- allocating to each vehicle a position within its respective shape.

6. The method according to any of claims 1 to 5, wherein the allocation data comprises, for each group or for each vehicle, timing information generated by said data processing means, the timing information including a time or time offset by which the allocation should be implemented.

7. The method according to any of claims 1 to 6 wherein the allocation data comprises data describing driving instructions for said vehicles, generated by said data processing means, said instructions allowing each of said vehicles to achieve the resulting allocation.

8. The method according to any of claims 1 to 7, wherein said set of constraints further comprises constraints relating to the features of said vehicles, such as dimensions, speed, destination, passenger occupancy, or any combination of the above.

9. The method according to any of claims 1 to 8, wherein said traffic rules comprise speed limits, lane dimensions, an indication of a portion of the road segment being reserved for at least one specific type of vehicles, or any combination of the above.

10. The method according to any of claims 1 to 9, wherein said traffic rules evolve in time and depend on road conditions, weather, or a combination thereof.

11. The method according to any of claims 1 to 10, wherein said set of constraints further comprises an overall exhaust gas emission limit for the vehicles on said road segment.

12. The method according to any of claims 1 to 11, wherein the resulting allocation data is applied by said data processing means on a traffic model generated from said first and second data, for the purpose of simulating traffic management.

13. A device for computing allocation data for the management of traffic on a road segment, the device comprising data processing means and at least one memory element for storing first data describing the road segment and second data describing an initial allocation of vehicles engaged on said road segment, comprising a set of features comprising vehicle dimensions for each vehicle, and an indication of the surface occupied by each vehicle on said road segment, wherein the data processing means are configured for:
- determining groups of vehicles based on said second data, wherein vehicles in the same group share at least one common feature;
and **characterized in that** the data processing means are further configured for:
- computing allocation data by:
-- associating at least one shape with each group of vehicles, wherein the shapes are chosen so that the aggregate surface of the shapes covers the aggregate surface occupied by all the vehicles of said group;
-- allocating the shapes, including the vehicles associated with each shape, to portions of the road segment;
wherein the shapes and the allocation are such that they satisfy a set of constraints, comprising the dimensions of said road segment and traffic rules applicable to said road segment at the time of allocation;
- storing the resulting allocation data in a memory element.

14. The device according to claim 13, wherein the data processing means are further configured to transmit, using a data transmitter, said allocation data to said vehicles.

15. A computer program comprising computer readable code means, which, when run on a computer, causes the computer to carry out the method according to any of claims 1 to 12.

16. A computer program product comprising a computer-readable medium on which the computer program according to claim 15 is stored.

## Patentansprüche

1. Ein Verfahren zur Fahrzeuglenkung auf einem Straßensegment, wobei das Verfahren die folgenden Schritte umfasst:
a) Bereitstellen von ersten Daten in einem Speicherelement, die das Straßensegment (110) beschreiben, und von zweiten Daten, die eine anfängliche Zuordnung (120) von Fahrzeugen (V1-V7) beschreiben, die auf dem Straßensegment unterwegs sind, mit einem Satz von Merkmalen, die Fahrzeugabmessungen für jedes Fahrzeug umfassen, und einer Angabe der von jedem Fahrzeug auf dem Straßensegment belegten Fläche;
b) unter Verwendung von Datenverarbeitungsmitteln die Bestimmung von Gruppen von Fahrzeugen (G1, G2, G3) auf der Grundlage der zweiten Daten, wobei die Fahrzeuge in derselben Gruppe mindestens ein gemeinsames Merkmal aufweisen;
**dadurch gekennzeichnet, dass** das Verfahren außerdem die folgenden Schritte umfasst:
c) unter Verwendung von Datenverarbeitungsmitteln, Berechnen von Zuordnungsdaten (130) durch:
- Zuordnen von mindestens einer Form (S1, S2, S3) zu jeder Gruppe von Fahrzeugen (G1, G2, G3), wobei die Formen so gewählt werden, dass die Gesamtfläche der Formen die von allen Fahrzeugen der Gruppe belegte Gesamtfläche abdeckt;
- Zuweisen der Formen, einschließlich der jeder Form zugeordneten Fahrzeuge, zu Teilen des Straßensegments (110);
wobei die Formen und die Zuteilung derart sind, dass sie einen Satz von Beschränkungen erfüllen, der die Abmessungen des Straßensegments und die zum Zeitpunkt der Zuteilung auf das Straßensegment anwendbaren Verkehrsregeln umfasst;
d) Übermittlung zumindest eines Teils der daraus resultierenden Zuweisungsdaten (130) an die Fahrzeuggruppen (G1, G2, G3).

2. Das Verfahren nach Anspruch 1, wobei die Zuweisung der Formen zu Teilen des Straßensegments von der anfänglichen Zuweisung der Fahrzeuge auf dem Straßensegment abhängt.

3. Das Verfahren nach einem der Ansprüche 1 oder 2, wobei die zweiten Daten, die eine anfängliche Zuordnung der auf dem Straßensegment verkehrenden Fahrzeuge beschreiben, eine auf Formen basierende Zuordnung umfassen, die zu einem früheren Zeitpunkt unter Verwendung des Verfahrens nach Anspruch 1 erhalten wurde, und wobei die Formen, die jeder Gruppe von Fahrzeugen in Schritt c) zugeordnet sind, von den Formen abhängen, die der Gruppe von Fahrzeugen in der früheren Zuordnung zugeordnet sind.

4. Das Verfahren nach einem der Ansprüche 1 bis 3, wobei zumindest ein Teil der zweiten Daten unter Verwendung von Erfassungsmitteln gewonnen wird, die Bildsensoren umfassen, die entlang des Straßensegments und/oder an Bord der Fahrzeuge vorgesehen sind.

5. Das Verfahren nach einem der Ansprüche 1 bis 4, das ferner den folgenden Schritt umfasst:
- jedem Fahrzeug eine Position innerhalb seiner jeweiligen Form zuzuweisen.

6. Das Verfahren nach einem der Ansprüche 1 bis 5, wobei die Zuweisungsdaten für jede Gruppe oder für jedes Fahrzeug von den Datenverarbeitungsmitteln erzeugte Zeitinformationen umfassen, wobei die Zeitinformationen eine Zeit oder einen Zeitversatz enthalten, um die die Zuweisung durchgeführt werden soll.

7. Das Verfahren nach einem der Ansprüche 1 bis 6, wobei die Zuweisungsdaten Daten umfassen, die Fahranweisungen für die Fahrzeuge beschreiben, die von den Datenverarbeitungsmitteln erzeugt wurden, wobei die Anweisungen es jedem der Fahrzeuge ermöglichen, die sich daraus ergebende Zuweisung zu erreichen.

8. Das Verfahren nach einem der Ansprüche 1 bis 7, wobei der Satz von Beschränkungen ferner Beschränkungen umfasst, die sich auf die Merkmale der Fahrzeuge beziehen, wie z.B. Abmessungen, Geschwindigkeit, Zielort, Passagierbelegung oder eine beliebige Kombination der oben genannten.

9. Das Verfahren nach einem der Ansprüche 1 bis 8, wobei die Verkehrsregeln Geschwindigkeitsbegrenzungen, Fahrspurabmessungen, die Angabe eines Teils des Straßenabschnitts, der für mindestens eine bestimmte Art von Fahrzeugen vorbehalten ist, oder eine beliebige Kombination der oben genannten Punkte umfassen.

10. Das Verfahren nach einem der Ansprüche 1 bis 9, wobei sich die Verkehrsregeln mit der Zeit entwickeln und von den Straßenbedingungen, dem Wetter oder einer Kombination davon abhängen.

11. Das Verfahren nach einem der Ansprüche 1 bis 10, wobei der Satz von Beschränkungen außerdem einen Gesamtgrenzwert für die Abgasemissionen der Fahrzeuge auf dem Straßenabschnitt umfasst.

12. Das Verfahren nach einem der Ansprüche 1 bis 11, wobei die sich ergebenden Zuweisungsdaten von den Datenverarbeitungsmitteln auf ein aus den ersten und zweiten Daten erzeugtes Verkehrsmodell angewendet werden, um das Verkehrsmanagement zu simulieren.

13. Eine Vorrichtung zum Berechnen von Zuweisungsdaten für das Management des Verkehrs auf einem Straßensegment, wobei die Vorrichtung Datenverarbeitungsmittel und mindestens ein Speicherelement zum Speichern erster Daten, die das Straßensegment beschreiben, und zweiter Daten, die eine anfängliche Zuweisung von Fahrzeugen, die auf dem Straßensegment verkehren, beschreiben, umfasst, wobei die Datenverarbeitungsmittel einen Satz von Merkmalen, die Fahrzeugabmessungen für jedes Fahrzeug umfassen, und eine Angabe der von jedem Fahrzeug auf dem Straßensegment belegten Fläche umfassen, wobei die Datenverarbeitungsmittel für Folgendes ausgelegt sind:
- das Bestimmen von Gruppen von Fahrzeugen auf der Grundlage der zweiten Daten, wobei die Fahrzeuge in derselben Gruppe mindestens ein gemeinsames Merkmal aufweisen;
und **dadurch gekennzeichnet, dass** die Datenverarbeitungsmittel weiter dafür ausgelegt sind:
- Berechnen von Zuordnungsdaten durch:
- Zuordnen von mindestens einer Form zu jeder Gruppe von Fahrzeugen, wobei die Formen so gewählt werden, dass die Gesamtoberfläche der Formen die von allen Fahrzeugen der Gruppe belegte Gesamtoberfläche abdeckt:
- Zuweisung der Formen, einschließlich der jeder Form zugeordneten Fahrzeuge, zu Teilen des Straßensegments;
wobei die Formen und die Zuteilung so gestaltet sind, dass sie einen Satz von Beschränkungen erfüllen, der die Abmessungen des Straßensegments und die zum Zeitpunkt der Zuteilung für das Straßensegment geltenden Verkehrsregeln umfasst;
- das Speichern der sich ergebenden Zuweisungsdaten in einem Speicherelement.

14. Die Vorrichtung nach Anspruch 13, wobei die Datenverarbeitungsmittel ferner so gestaltet sind, dass sie die Zuweisungsdaten unter Verwendung eines Datensenders an die Fahrzeuge übertragen.

15. Ein Computerprogramm mit computerlesbaren Codemitteln, das, wenn es auf einem Computer ausgeführt wird, den Computer veranlasst, das Verfahren nach einem der Ansprüche 1 bis 12 auszuführen.

16. Ein Computerprogrammprodukt, das ein computerlesbares Medium umfasst, auf dem das Computerprogramm nach Anspruch 15 gespeichert ist.

## Revendications

1. Un procédé de routage de véhicules sur un tronçon de route, le procédé comprenant les étapes suivantes consistant à :
a) fournir, dans un élément de mémoire, des premières données décrivant le tronçon de route (110) et des secondes données décrivant une attribution initiale (120) des véhicules (V1-V7) engagés sur le tronçon de route, comprenant un ensemble de caractéristiques comprenant les dimensions du véhicule pour chaque véhicule, et une indication de la surface occupée par chaque véhicule sur le tronçon de route ;
b) à l'aide de moyens de traitement des données, déterminer des groupes de véhicules (G1, G2, G3) sur la base de ces secondes données, les véhicules d'un même groupe partageant au moins une caractéristique commune ;
**caractérisé en ce que** le procédé comprend en outre les étapes suivantes consistant à :
c) à l'aide de moyens de traitement des données, calculer les données d'attribution (130):
- en associant au moins une forme (S1, S2, S3) à chaque groupe de véhicules (G1, G2, G3), les formes étant choisies de telle sorte que la surface globale des formes couvre la surface globale occupée par tous les véhicules dudit groupe ;
- en attribuant les formes, y compris les véhicules associés à chaque forme, à des portions du tronçon de route (110) ;
dans lequel les formes et l'attribution sont telles qu'elles satisfont à un ensemble de contraintes, comprenant les dimensions dudit tronçon de route et les règles de circulation applicables audit tronçon de route au moment de l'attribution ;
d) communiquer au moins une partie des données d'attribution résultantes (130) auxdits groupes de véhicules (G1, G2, G3).

2. Le procédé selon la revendication 1, dans lequel l'attribution des formes à des portions du tronçon de route dépend de l'attribution initiale des véhicules sur ledit tronçon de route.

3. Le procédé selon l'une des revendications 1 ou 2, dans lequel les secondes données, qui décrivent une attribution initiale des véhicules engagés sur le tronçon de route, comprennent une attribution basée sur les formes obtenue précédemment à l'aide du procédé selon la revendication 1, et dans lequel les formes associées à chaque groupe de véhicules à l'étape c) dépendent des formes associées audit groupe de véhicules dans ladite attribution antérieure.

4. Le procédé selon l'une des revendications 1 à 3, dans lequel au moins une partie desdites secondes données est obtenue à l'aide de moyens de détection, notamment des capteurs d'images installés le long dudit tronçon de route et/ou à bord desdits véhicules.

5. Le procédé selon l'une des revendications 1 à 4, comprenant en outre l'étape consistant à :
- attribuer à chaque véhicule une position à l'intérieur de sa forme respective.

6. Le procédé selon l'une des revendications 1 à 5, dans lequel les données d'attribution comprennent, pour chaque groupe ou pour chaque véhicule, des informations de synchronisation générées par lesdits moyens de traitement des données, les informations de synchronisation comprenant un temps ou un décalage temporel selon lequel l'attribution doit être mise en oeuvre.

7. Le procédé selon l'une des revendications 1 à 6, dans lequel les données d'attribution comprennent des données décrivant des instructions de conduite pour lesdits véhicules, générées par lesdits moyens de traitement des données, lesdites instructions permettant à chacun desdits véhicules d'atteindre l'attribution résultante.

8. Le procédé selon l'une des revendications 1 à 7, dans lequel ledit ensemble de contraintes comprend en outre des contraintes relatives aux caractéristiques desdits véhicules, telles que les dimensions, la vitesse, la destination, le nombre de passagers, ou toute combinaison de ces éléments.

9. Le procédé selon l'une des revendications 1 à 8, dans lequel lesdites règles de circulation comprennent des limitations de vitesse, des dimensions de voies, une indication qu'une partie du tronçon de route est réservée à au moins un type spécifique de véhicules, ou toute combinaison de ce qui précède.

10. Le procédé selon l'une des revendications 1 à 9, dans lequel lesdites règles de circulation évoluent dans le temps et dépendent de l'état de la route, des conditions météorologiques ou d'une combinaison de ces éléments.

11. Le procédé selon l'une des revendications 1 à 10, dans lequel ledit ensemble de contraintes comprend en outre une limite globale d'émission de gaz d'échappement pour les véhicules circulant sur ledit tronçon de route.

12. Le procédé selon l'une des revendications 1 à 11, dans lequel les données d'attribution résultantes sont appliquées par lesdits moyens de traitement des données sur un modèle de trafic généré à partir desdites premières et secondes données, dans le but de simuler la gestion du trafic.

13. Un dispositif permettant de calculer les données d'attribution pour la gestion du trafic sur un tronçon de route, le dispositif comprenant des moyens de traitement des données et au moins un élément de mémoire pour stocker des premières données décrivant le tronçon de route et des secondes données décrivant une attribution initiale des véhicules engagés sur ledit tronçon de route, comprenant un ensemble de caractéristiques comprenant les dimensions du véhicule pour chaque véhicule, et une indication de la surface occupée par chaque véhicule sur ledit tronçon de route, dans lequel les moyens de traitement des données sont configurés pour :
- déterminer des groupes de véhicules sur la base desdites secondes données, les véhicules d'un même groupe partageant au moins une caractéristique commune ;
et **caractérisé en ce que** les moyens de traitement des données sont en outre configurés pour :
- calculer les données d'attribution :
-- en associant au moins une forme à chaque groupe de véhicules, les formes étant choisies de telle sorte que la surface globale des formes couvre la surface globale occupée par tous les véhicules dudit groupe ;
-- en attribuant les formes, y compris les véhicules associés à chaque forme, à des portions du tronçon de route ;
dans lequel les formes et l'attribution sont telles qu'elles satisfont à un ensemble de contraintes, comprenant les dimensions dudit tronçon de route et les règles de circulation applicables audit tronçon de route au moment de l'attribution ;
- stocker les données d'attribution résultantes dans un élément de mémoire.

14. Le dispositif selon la revendication 13, dans lequel les moyens de traitement des données sont en outre configurés pour transmettre, à l'aide d'un émetteur de données, lesdites données d'attribution auxdits véhicules.

15. Un programme d'ordinateur comprenant des moyens de codage lisibles par ordinateur qui, lorsqu'il est exécuté sur un ordinateur, amène l'ordinateur à mettre en oeuvre le procédé selon l'une quelconque des revendications 1 à 12.

16. Un produit de programme informatique comprenant un support lisible par ordinateur sur lequel le programme d'ordinateur selon la revendication 15 est stocké.
